# EUROPEAN PATENT APPLICATION

(11) **EP 4 851 967 A1**
(43) Date of publication of application: **09.12.2026**
(21) Application number: 25760883.6
(22) Date of filing: 25.02.2025
(51) Int. Cl.: G08G 1/0967

(54) **DRIVING CONTROL METHOD, COLLABORATIVE DRIVING METHOD, AND RELATED APPARATUS**

(30) Priority: 28.02.2024 CN 202410225645
(71) Applicant: Yinwang Intelligent Technologies Co., Ltd., Shenzhen, Guangdong 518110 (CN)
(72) Inventor: ZHOU, Wei, Shenzhen, Guangdong 518129 (CN); YANG, Yu, Shenzhen, Guangdong 518129 (CN)
(74) Representative: Maiwald GmbH
(86) International application number: PCT/CN2025/078928
(87) International publication number: WO 2025/180342

(57) **Abstract**

A driving control method, a collaborative driving method, and a related apparatus are provided. Communication between a vehicle and a roadside sensing apparatus is implemented through a cloud device, so that when the vehicle cannot sense a first object, sensing information of the first object from the roadside sensing apparatus can be obtained. In addition, the obtained sensing information and sensing information obtained by an onboard sensor of the vehicle are fused to expand a sensing range, so as to implement driving control of the vehicle based on the fused sensing information, thereby effectively reducing a potential driving safety hazard for the vehicle.

## Description

This application claims priority to Chinese Patent Application No. 202410225645.9, filed with the China National Intellectual Property Administration on February 28, 2024, and entitled "DRIVING CONTROL METHOD, COLLABORATIVE DRIVING METHOD, AND RELATED APPARATUS", which is incorporated herein by reference in its entirety.

### TECHNICAL FIELD

This application relates to the field of intelligent driving technologies, and in particular, to a driving control method, a collaborative driving method, and a related apparatus.

### BACKGROUND

Currently, there are two main approaches to implementing intelligent driving: vehicle-based intelligent driving and vehicle-road collaborative intelligent driving. In terms of vehicle-based intelligent driving, the intelligent driving technology centered on vehicle-based intelligence has incorporated an L2 assisted driving function in products. However, since vehicle-based intelligent driving merely relies on onboard sensor detection, signal feedback, and an execution mechanism of a vehicle to complete instructions, it is difficult for the vehicle to avoid a threat beyond sensing range of the sensors in a timely manner, and consequently driving safety of the vehicle decreases. Therefore, vehicle-based intelligent driving has great limitations in the evolution toward high-level intelligent driving. In contrast, implementing intelligent driving through vehicle-road collaboration can further reduce accident risks and probabilities an on the basis of vehicle-based intelligence, and can also better evolve toward high-level intelligent driving.

Although vehicle-road collaboration solution has existed for many years, and corresponding communication standards have been established for vehicle-road communication, currently, costs for implementing vehicle-road collaboration are relatively high, posing challenges for practical deployment.

### SUMMARY

Embodiments of this application provide a driving control method, a collaborative driving method, and a related apparatus, to effectively reduce a potential driving safety hazard for a vehicle, reduce implementation costs, and facilitate promotion and use.

According to a first aspect, this application provides a driving control method, where the method includes: obtaining first information from a cloud device, where the first information includes sensing information of a roadside sensing apparatus for a first object; obtaining first fusion information based on the first information and first sensing information, and performing first driving control based on the first fusion information, where the first sensing information includes sensing information obtained by using an onboard sensor of a vehicle; and when the vehicle senses the first object based on second sensing information, performing second driving control based on the second sensing information, where the second sensing information includes sensing information that is for the first object and that is obtained by using the onboard sensor of the vehicle.

For example, the roadside sensing apparatus is deployed on a driving blind spot road section in an advancing direction of the vehicle, and a sensing range of the roadside sensing apparatus covers the driving blind spot road section. The driving blind spot road section includes one or more of the following: a curved road section, a road section including an intersection, a road section including an entrance or an exit, or a crest road section.

In the foregoing solution, the roadside sensing apparatus can sense an object outside a sensing range of the vehicle, and send sensing information of the object to the vehicle by using the cloud device for sensing fusion. If the vehicle itself can sense the object, the vehicle implements driving control by using onboard sensing of the vehicle, thereby saving resources for fusion computing. In other words, the roadside sensing apparatus is used as a sensing blind spot filling device of the vehicle, so that the vehicle can obtain information outside the sensing range, thereby more comprehensively understanding a traveling environment, and reducing a potential safety hazard. In addition, in this solution, direct communication between a vehicle and a road is not required, and deployment of an on board unit (on board unit, OBU) and a road side unit (road side unit, RSU) is reduced, thereby greatly reducing costs.

In a possible implementation, the first object includes one or more target vehicles, and the first information includes sensing information of the roadside sensing apparatus for the one or more target vehicles.

In the foregoing solution, the vehicle may obtain, by using the cloud, sensing information of the roadside sensing apparatus for a target vehicle, so that the sensing range of the vehicle is expanded, thereby facilitating blind spot filling.

In a possible implementation, the method further includes: obtaining second information from the cloud device, where the second information indicates sensing information of the roadside sensing apparatus for a second object, and the second object includes one or more pedestrians; and discarding the second information.

In the foregoing solution, because accuracy of the pedestrian information sensed by the roadside sensing apparatus is not high, discarding can reduce interference to subsequent fusion and driving control.

In a possible implementation, the method further includes: obtaining third information from the cloud device, where the third information indicates the sensing information of the roadside sensing apparatus for the first object when the vehicle senses the first object; and performing the second driving control based on the second sensing information of the vehicle includes: implementing information fusion on the third information and the second sensing information based on a preset weight, to obtain second fusion information, where a weight of the second sensing information is greater than a weight of the third information; and performing the second driving control based on the second fusion information.

In the foregoing solution, fusion between roadside sensing and onboard sensing of the vehicle is implemented by using a weight. On one hand, the sensing range of the vehicle is expanded, and on the other hand, a weight of the onboard sensing of the vehicle is relatively high, so that a confidence level of sensing fusion can be improved.

In a possible implementation, the method further includes: obtaining fourth information from the cloud device, where the fourth information indicates the sensing information of the roadside sensing apparatus for the first object when the vehicle senses the first object; calibrating the fourth information based on the second sensing information, to obtain a calibration result; and sending the calibration result, where the calibration result is used to correct a sensing confidence level of the roadside sensing apparatus.

In the foregoing solution, the vehicle may calibrate the roadside sensing information based on the sensing information of the vehicle. The calibrated roadside sensing information may be used to correct a sensing confidence level of the roadside sensing apparatus, thereby improving detection accuracy of the roadside sensing apparatus.

In a possible implementation, when the vehicle senses the first object, or when the first object leaves a sensing range of the roadside sensing apparatus, the method further includes: obtaining fifth information from the cloud device, where the fifth information indicates the vehicle to disable a roadside sensing fusion function, and the roadside sensing fusion function is a function of fusing the sensing information of the roadside sensing apparatus and the sensing information of the vehicle.

In the foregoing solution, if there is no threat object in the sensing range of the roadside sensing apparatus or the vehicle can sense the threat object, the vehicle may disable the roadside fusion sensing function, and resume the vehicle-based sensing driving mode, thereby reducing fusion computing overheads.

In a possible implementation, obtaining the first information from the cloud device includes: obtaining the first information when the vehicle cannot sense the first object, and the first object meets a first condition, where the first condition includes: a distance between the first object and the vehicle is less than or equal to a first preset distance, and/or a time-to-collision between the first object and the vehicle is less than or equal to first preset duration.

In the foregoing solution, the roadside sensing information is obtained only when the first object threatens driving safety of the vehicle, so that transmission bandwidth can be saved.

According to a second aspect, this application provides a collaborative driving method, where the method includes: obtaining vehicle state information from a vehicle, where the vehicle state information includes location information and speed information of the vehicle; obtaining first information, where the first information indicates sensing information of a roadside sensing apparatus for a first object; determining, based on the vehicle state information and the first information, that the first object meets a first condition, where the first condition includes: a distance between the first object and the vehicle is less than or equal to a first preset distance, and/or a time-to-collision between the first object and the vehicle is less than or equal to first preset duration; and sending the first information to the vehicle.

In the foregoing solution, the cloud device may obtain information about the vehicle and sensing information of a roadside device for the first object, and then determine whether a condition for sending the sensing information of the first object to the vehicle is met. The sensing information of the first object is sent only when the condition is met. In other words, in this solution, through forwarding by the cloud device, the roadside sensing apparatus can be used as a sensing blind spot filling device of the vehicle, so that the vehicle can obtain information outside the sensing range, thereby more comprehensively understanding a traveling environment, and reducing a potential safety hazard. In addition, in this solution, direct communication between a vehicle and a road is not required, and deployment of an on board unit OBU and a road side unit RSU is reduced, thereby greatly reducing costs. Further, the cloud sends information to the vehicle only when a condition is met, so that transmission bandwidth can be saved.

In a possible implementation, the method further includes: obtaining second information from the roadside sensing apparatus, where the second information indicates the sensing information of the roadside sensing apparatus for the first object when the vehicle senses the first object; sending the second information to the vehicle; obtaining third information from the vehicle, where the third information is a calibration result obtained by calibrating the second information based on sensing information of the vehicle; and sending the calibration result to the roadside sensing apparatus, where the calibration result is used to correct a sensing confidence level of the roadside sensing apparatus.

In the foregoing solution, communication between the vehicle and the roadside sensing apparatus is implemented by using the cloud, so that the vehicle can calibrate the roadside sensing information based on the sensing information of the vehicle. The calibrated roadside sensing information may be used to correct a sensing confidence level of the roadside sensing apparatus, thereby improving detection accuracy of the roadside sensing apparatus.

In a possible implementation, when the vehicle senses the first object, or when the first object leaves a sensing range of the roadside sensing apparatus, the method further includes: sending fourth information to the vehicle, where the fourth information indicates the vehicle to disable a roadside sensing fusion function, and the roadside sensing fusion function is a function of fusing the sensing information of the roadside sensing apparatus and the sensing information of the vehicle.

For example, the method further includes: obtaining fifth information from the roadside sensing apparatus, where the fifth information indicates that the first object leaves the sensing range of the roadside sensing apparatus; and triggering, based on the fifth information, an operation of sending the fourth information to the vehicle.

In the foregoing solution, if there is no threat object in the sensing range of the roadside sensing apparatus or the vehicle can sense the threat object, the cloud device may be indicated, and the cloud device may notify the vehicle to disable the roadside fusion sensing function, and resume the vehicle-based sensing driving mode, thereby reducing fusion computing overheads.

According to a third aspect, this application provides a collaborative driving method, where the method is applied to a roadside sensing apparatus, and the method includes: obtaining first sensing information, where the first sensing information includes sensing information of a first object and sensing information of the vehicle; and identifying, based on the first sensing information, that the first object threatens driving safety of the vehicle; and sending first information to a cloud device, where the first information indicates sensing information of the roadside sensing apparatus for the first object, and the first information is sent to the vehicle.

In the foregoing solution, the roadside sensing apparatus implements communication between the vehicle and the roadside sensing apparatus by using a cloud, so that the roadside sensing apparatus can be used as a sensing blind spot filling device of the vehicle, and the vehicle can obtain information outside the sensing range, thereby more comprehensively understanding a traveling environment, and reducing a potential safety hazard. In addition, in this solution, direct communication between a vehicle and a road is not required, and deployment of an on board unit OBU and a road side unit RSU is reduced, thereby greatly reducing costs. Further, the roadside sensing may first determine that there is a safety risk before sending information, thereby saving data transmission bandwidth.

In a possible implementation, the method further includes: sending second information to the cloud device, where the second information indicates the sensing information of the roadside sensing apparatus for the first object when the vehicle senses the first object; and obtaining a calibration result from the cloud device, where the calibration result is used to correct a sensing confidence level of the roadside sensing apparatus, and the calibration result is a calibration result obtained by the vehicle by calibrating the second information based on sensing information of the vehicle.

In the foregoing solution, communication between the vehicle and the roadside sensing apparatus is implemented by using the cloud, so that the vehicle can calibrate the roadside sensing information based on the sensing information of the vehicle. The calibrated roadside sensing information may be used to correct a sensing confidence level of the roadside sensing apparatus, thereby improving detection accuracy of the roadside sensing apparatus.

In a possible implementation, the method further includes: sending third information to the cloud device, where the third information indicates that the first object leaves a sensing range of the roadside sensing apparatus, the third information is used to trigger the cloud device to send fourth information to the vehicle, the fourth information indicates the vehicle to disable a roadside sensing fusion function, and the roadside sensing fusion function is a function of fusing the sensing information of the first object and the sensing information of the vehicle by the roadside sensing apparatus.

In the foregoing solution, if there is no threat object in the sensing range of the roadside sensing apparatus or the vehicle can sense the threat object, the cloud may be indicated, and the cloud may notify the vehicle to disable the roadside fusion sensing function, and resume the vehicle-based sensing driving mode, thereby reducing fusion computing overheads.

According to a fourth aspect, this application provides a vehicle, where the vehicle includes a unit configured to implement the method according to any implementation of the first aspect.

According to a fifth aspect, this application provides a cloud device, where the cloud device includes a unit configured to implement the method according to any implementation of the second aspect.

According to a sixth aspect, this application provides a roadside sensing apparatus, where the roadside sensing apparatus includes a unit configured to implement the method according to any implementation of the third aspect.

According to a seventh aspect, this application provides a vehicle, where the vehicle includes a processor and a memory. The memory is coupled to the processor. When executing a computer program or computer instructions stored in the memory, the processor can implement the method according to any implementation of the first aspect. The vehicle may further include a communication interface. The communication interface is used by the vehicle to communicate with another vehicle. For example, the communication interface may be a transceiver, a circuit, a bus, a module, or another type of communication interface.

In a possible implementation, the vehicle may include:
the memory, configured to store the computer program or the computer instructions; and
the processor, configured to: obtain first information from a cloud device, where the first information includes sensing information of a roadside sensing apparatus for a first object; obtain first fusion information based on the first information and first sensing information, and perform first driving control based on the first fusion information, where the first sensing information includes sensing information obtained by using an onboard sensor of a vehicle; and when the vehicle senses the first object based on second sensing information, perform second driving control based on the second sensing information, where the second sensing information includes sensing information that is for the first object and that is obtained by using the onboard sensor of the vehicle.

It should be noted that, in this application, the computer program or the computer instructions in the memory may be pre-stored, or may be downloaded from the Internet and stored when the vehicle is used. A source of the computer program or the computer instructions in the memory is not specifically limited in this application. The coupling in embodiments of this application may be an indirect coupling or connection between apparatuses, units, or modules in an electrical form, a mechanical form, or another form, and is used for information exchange between the apparatuses, the units, or the modules.

According to an eighth aspect, this application provides a cloud device, where the cloud device includes a processor and a memory. The memory is coupled to the processor. When executing a computer program or computer instructions stored in the memory, the processor can implement the method according to any implementation of the second aspect. The cloud device may further include a communication interface. The communication interface is used by the cloud device to communicate with another cloud device. For example, the communication interface may be a transceiver, a circuit, a bus, a module, or another type of communication interface.

In a possible implementation, the cloud device may include:
the memory, configured to store the computer program or the computer instructions; and
the processor, configured to: obtain vehicle state information from a vehicle, where the vehicle state information includes location information and speed information of the vehicle; obtain first information, where the first information indicates sensing information of a roadside sensing apparatus for a first object; determine, based on the vehicle state information and the first information, that the first object meets a first condition, where the first condition includes: a distance between the first object and the vehicle is less than or equal to a first preset distance, and/or a time-to-collision between the first object and the vehicle is less than or equal to first preset duration; and send the first information to the vehicle by using the communication interface.

It should be noted that, in this application, the computer program or the computer instructions in the memory may be pre-stored, or may be downloaded from the Internet and stored when the cloud device is used. A source of the computer program or the computer instructions in the memory is not specifically limited in this application. The coupling in embodiments of this application may be an indirect coupling or connection between apparatuses, units, or modules in an electrical form, a mechanical form, or another form, and is used for information exchange between the apparatuses, the units, or the modules.

According to a ninth aspect, this application provides a roadside sensing apparatus, where the roadside sensing apparatus includes a processor and a memory. The memory is coupled to the processor. When executing a computer program or computer instructions stored in the memory, the processor can implement the method according to any implementation of the third aspect. The roadside sensing apparatus may further include a communication interface. The communication interface is used by the roadside sensing apparatus to communicate with another roadside sensing apparatus. For example, the communication interface may be a transceiver, a circuit, a bus, a module, or another type of communication interface.

In a possible implementation, the roadside sensing apparatus may include:
the memory, configured to store the computer program or the computer instructions; and
the processor, configured to: obtain first sensing information, where the first sensing information includes sensing information of a first object and sensing information of the vehicle; and identify, based on the first sensing information, that the first object threatens driving safety of the vehicle; and send first information to a cloud device by using the communication interface, where the first information indicates sensing information of the roadside sensing apparatus for the first object, and the first information is sent to the vehicle.

It should be noted that, in this application, the computer program or the computer instructions in the memory may be pre-stored, or may be downloaded from the Internet and stored when the roadside sensing apparatus is used. A source of the computer program or the computer instructions in the memory is not specifically limited in this application. The coupling in embodiments of this application may be an indirect coupling or connection between apparatuses, units, or modules in an electrical form, a mechanical form, or another form, and is used for information exchange between the apparatuses, the units, or the modules.

According to a tenth aspect, this application provides a collaborative driving system, where the system includes a vehicle, a cloud device, and a roadside sensing apparatus. The vehicle is the vehicle according to any implementation of the fourth aspect, the cloud device is the cloud device according to any implementation of the fifth aspect, and the roadside sensing apparatus is the roadside sensing apparatus according to any implementation of the sixth aspect.

Alternatively, the vehicle is the vehicle according to any implementation of the seventh aspect, the cloud device is the cloud device according to any implementation of the eighth aspect, and the roadside sensing apparatus is the roadside sensing apparatus according to any implementation of the ninth aspect.

According to an eleventh aspect, this application provides a computer-readable storage medium. The computer-readable storage medium stores a computer program or computer instructions, and the computer program or the computer instructions are executed by a processor to implement the method according to any implementation of the first aspect.

According to a twelfth aspect, this application provides a computer-readable storage medium. The computer-readable storage medium stores a computer program or computer instructions, and the computer program or the computer instructions are executed by a processor to implement the method according to any implementation of the second aspect.

According to a thirteenth aspect, this application provides a computer-readable storage medium. The computer-readable storage medium stores a computer program or computer instructions, and the computer program or the computer instructions are executed by a processor to implement the method according to any implementation of the third aspect.

According to a fourteenth aspect, this application provides a computer program product. When the computer program product is executed by a processor, the method according to any implementation of the first aspect is implemented.

According to a fifteenth aspect, this application provides a computer program product. When the computer program product is executed by a processor, the method according to any implementation of the second aspect is implemented.

According to a sixteenth aspect, this application provides a computer program product. When the computer program product is executed by a processor, the method according to any implementation of the third aspect is implemented.

The solutions provided in the fourth aspect to the sixteenth aspect are used to implement or cooperatively implement the method correspondingly provided in the first aspect, the second aspect, or the third aspect, and therefore, can achieve beneficial effects the same as or corresponding to those of the corresponding method in the first aspect, the second aspect, or the third aspect. Details are not described herein again.

### BRIEF DESCRIPTION OF DRAWINGS

FIG. 1 and FIG. 2 are diagrams of a collaborative driving system according to an embodiment of this application;
FIG. 3 and FIG. 3A are diagrams of an architecture of an application scenario according to an embodiment of this application;
FIG. 4 to FIG. 8 are diagrams of an application scenario according to an embodiment of this application;
FIG. 9 is a schematic flowchart of a method according to an embodiment of this application; and
FIG. 10 to FIG. 13 are diagrams of a structure of an apparatus according to an embodiment of this application.

### DESCRIPTION OF EMBODIMENTS

The following describes embodiments of this application by using accompanying drawings in embodiments of this application as examples. In the specification, claims, and accompanying drawings of this application, the terms "first", "second", "third", "fourth", and the like are intended to distinguish between different objects but do not indicate a particular order. In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device. "Embodiments" mentioned herein mean that specific features, structures, or characteristics described in combination with embodiments may be included in at least one embodiment of this application. The phrase shown in various locations in the specification may not necessarily refer to a same embodiment, and is not an independent or alternative embodiment exclusive from another embodiment. It is explicitly and implicitly understood by persons skilled in the art that embodiments described herein may be combined with another embodiment.

In embodiments of this application, on one hand, embodiments are independent of each other, that is, embodiments are not mutually limited or constrained. On the other hand, unless otherwise specified and a logical conflict occurs, terms and/or descriptions in different embodiments are consistent and may be referenced by each other. Technical features in different embodiments may be combined to form a new embodiment based on an internal logical relationship of the technical features.

The following describes embodiments of this application by using examples with reference to the accompanying drawings.

First, a technical problem to be resolved in embodiments of this application is described. In an existing implementation solution, to further reduce a risk and a probability of a driving accident on the basis of vehicle-based intelligence, more information in a road environment is obtained in a vehicle-road collaboration manner, to assist a vehicle in driving more safely. However, in the existing solution, an implementation is a V2X vehicle-road collaboration solution. In this solution, a V2X device (namely, an on board unit (on board unit, OBU)) may be deployed in the vehicle to collect vehicle information of the vehicle, and broadcast the vehicle information by using a basic safety message (basic safety message, BSM). After receiving a BSM message of a surrounding vehicle, a roadside device (namely, a road side unit (road side unit, RSU)) performs related traffic analysis on a motion status of the surrounding vehicle. In addition, another vehicle may subscribe to related roadside data and select a suitable road environment, which can alleviate traffic congestion and reduce an occurrence rate of an accident. However, in this solution, to achieve better traffic information release, a large quantity of RSU devices need to be deployed along a road. As a result, it is difficult to deploy the vehicle-road collaboration solution, and deployment costs are high, and it is difficult to promote the solution on a large scale.

In another implementation of the existing solution, the vehicle is determined with reference to track information of the vehicle, and the track information is formed by using vehicle information on a plurality of roadside RSU devices. In addition, the roadside RSU devices send the track information of these vehicles to other vehicles, to provide a basis for the vehicles to make more accurate driving decisions. However, this solution mainly considers that a vehicle track is formed by using vehicle information obtained by a plurality of roadside RSU devices, so as to send the vehicle track to other vehicles to implement safe driving and avoid collision. This implementation also requires a large quantity of RSU devices to be deployed along a road.

According to the foregoing description, it can be learned that it is rather difficult to implement the existing implementation solution in an actual application. Specifically, from a roadside perspective, RSUs need to be continuously deployed on a road, which causes extremely high deployment costs. From a vehicle perspective, an OBU-related device needs to be deployed at the vehicle end to implement roadside communication, which increases vehicle purchase costs and adds a point of vehicle failure. In addition, a special spectrum is required for implementing vehicle-road communication by using an RSU and an OBU. Different countries have different requirements on the communication spectrum. As a result, the implementation of the vehicle-road collaboration solution varies with countries. In addition, deployment and certification requirements of an RSU and a vehicle in different countries are added, thereby increasing costs and overheads brought by certification.

Therefore, to resolve the foregoing problem that it is difficult to implement the existing solution in an actual application due to high implementation costs, embodiments of this application provide a corresponding method and a related apparatus.

The following first describes an example of a collaborative driving system provided in embodiments of this application.

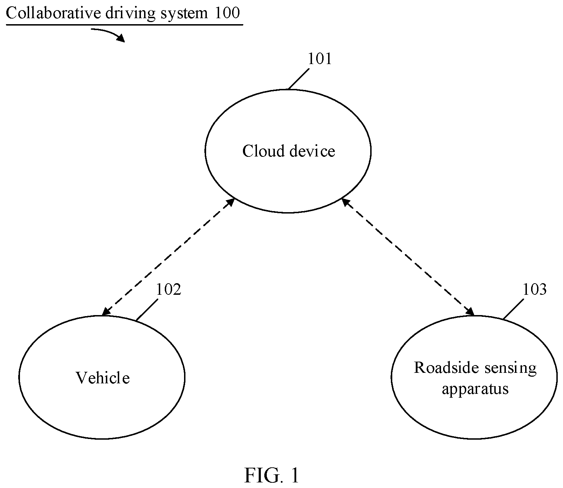

FIG. 1 is a diagram of a structure of a collaborative driving system 100 according to an embodiment of this application. The collaborative driving system 100 includes a cloud device 101, a vehicle 102, and a roadside sensing apparatus 103. There may be one or more vehicles 102 and one or more roadside sensing apparatuses 103. This is not limited in embodiments of this application.

For example, the cloud device 101 may include, for example, a device that can implement computing and/or data processing, such as a cloud server and/or a cloud virtual machine. Alternatively, the cloud device 101 may include, for example, a server cluster. The cloud device 101 may communicate with the vehicle 102, to provide a plurality of services for the vehicle 102. For example, the vehicle 102 is provided with an over-the-air (over the air, OTA) upgrade service, a high-precision map service, an autonomous driving or assisted driving service, an information forwarding service, and the like. In addition, the cloud device 101 may further communicate with the roadside sensing apparatus 103, to provide a plurality of services for the roadside sensing apparatus 103. For example, an information analysis and processing service or an information forwarding service is provided for the roadside sensing apparatus 103.

For example, the vehicle 102 may be, for example, any type of vehicle traveling on a road, for example, a car, a bus, a truck, a fire engine, a police vehicle, a sanitation vehicle, a concrete vehicle, a semi-trailer, a garbage truck, or a forklift. The vehicle 102 may travel by using an intelligent driving technology such as assisted driving or autonomous driving. A detection apparatus is mounted in the vehicle 102 to detect and sense an environment around the vehicle 102. For example, the detection apparatus may include, for example, a sensor such as a camera or a radar. The radar may include, for example, various types of radars such as an ultrasonic radar, a lidar, a millimeter-wave radar, or a microwave radar. This is not limited in embodiments of this application. Each detection device has its own detection range. The detection apparatus can sense an object in the detection range. In embodiments of this application, if the detection apparatus cannot sense a specific object, it is considered that the object is not within the detection range of the detection apparatus. The detection range may also be referred to as a sensing range. A superposition of detection ranges of one or more detection apparatuses mounted in the vehicle 102 is a sensing range of the vehicle 102.

For example, the vehicle 102 may interact with the cloud device 101, to improve an intelligent driving function, thereby improving safety and travel efficiency of the vehicle. For example, the vehicle 102 may collect road surface information and surrounding vehicle information by using a sensing apparatus mounted on the vehicle, and upload the collected information, driving state information of the vehicle, and the like to the cloud device 101. The vehicle 102 may alternatively receive information from the cloud device 101 to assist the vehicle in driving.

For example, the roadside sensing apparatus 103 may be sensing apparatuses deployed on two sides of a road. The roadside sensing apparatus 103 may include, for example, a detection apparatus such as a camera or a radar. The radar may include, for example, various types of radars such as an ultrasonic radar, a lidar, a millimeter-wave radar, or a microwave radar. This is not limited in embodiments of this application. For example, in a possible implementation, the roadside sensing apparatus 103 may further include a sensing computing unit. The sensing computing unit performs computing processing and analysis on data sensed by the sensor, to obtain analyzed information. The roadside sensing apparatus 103 may interact with the cloud device 101, to send the obtained information to the cloud device 101. The roadside sensing apparatus 103 also has its own detection range (actually, a detection range of a detection apparatus such as a camera or a radar). The detection apparatus can sense an object in the detection range. In embodiments of this application, if the detection apparatus cannot sense a specific object, it is considered that the object is not within the detection range of the detection apparatus. The detection range may also be referred to as a sensing range of the roadside sensing apparatus 103. For example, the sensing computing unit of the roadside sensing apparatus 103 may be integrated with the sensor. Alternatively, the sensing computing unit may be an independent apparatus or module that can communicate with the sensor.

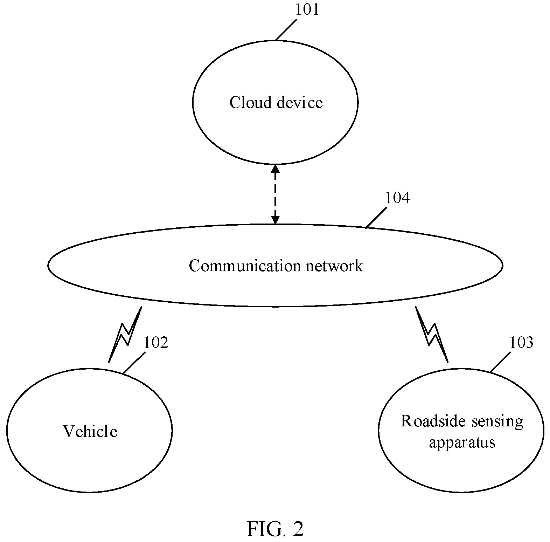

For example, the vehicle 102 and the roadside sensing apparatus 103 may communicate with the cloud device 101 in a wired or wireless manner. In embodiments of this application, a wireless communication manner is used as an example for description. For example, reference may be made to FIG. 2. As shown in FIG. 2, a vehicle 102 and a roadside sensing apparatus 103 access a communication network 104 in a wireless communication manner. The communication network 104 transmits information from the vehicle 102 and/or the roadside sensing apparatus 103 to the cloud device 101.

For example, the communication network 104 includes a radio access device. The vehicle 102 and the roadside sensing apparatus 103 may access the communication network 104 by using a radio access device. The radio access device may include, for example, a macro base station, a micro base station (also referred to as a small cell), a relay station, an access point (for example, an access node in a Wi-Fi system), and a cell (Cell). For example, a base station may be an evolved NodeB (evolutional NodeB, eNB), and a next-generation node (next-generation NodeB, gNB) in a 5G system or a new radio (new radio, NR) system. In addition, the base station may alternatively be a transmission reception point (transmission receive point, TRP), a central unit (central unit, CU), or another network entity. In addition, in a scenario of a distributed base station, the radio access device may be a baseband processing unit (baseband unit, BBU) and a radio frequency unit (remote radio unit, RRU); and in a scenario of a cloud radio access network (cloud radio access network, CRAN), the radio access device may be a baseband pool BBU pool and a radio frequency unit RRU. Alternatively, the radio access device may be an access network device or a module of an access network device in an open access network (open RAN, ORAN) system. For example, the radio access device may be a module or unit that can implement some functions of the base station. For example, the radio access device may be a central unit (central unit, CU), a distributed unit (distributed unit, DU), a CU-control plane (control plane, CP), a CU-user plane (user plane, UP), or a radio unit (radio unit, RU). In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. It may be understood that, only an example is used herein, and a specific technology and a specific device form used by the radio access device are not limited in embodiments of this application.

For example, the communication network 104 further includes a network device. The network device is connected to the radio access device, and is configured to forward, to the cloud device 101, information that is received by the radio access device and that is from the vehicle 102 and/or the roadside sensing apparatus 103. In addition, it may be understood that the cloud device 101 may send information to the vehicle 102 and/or the roadside sensing apparatus 103 by using the communication network 104. The network device may include, for example, a router, a switch, a wireless relay device, or a wireless backhaul device. It may be understood that, only an example is used herein, and a specific technology and a specific device form used by the network device are not limited in embodiments of this application.

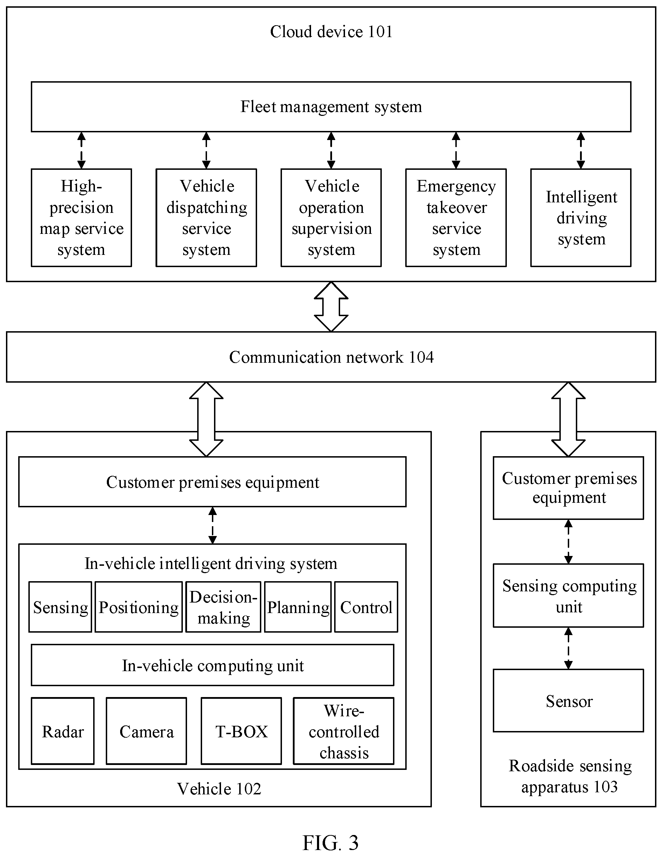

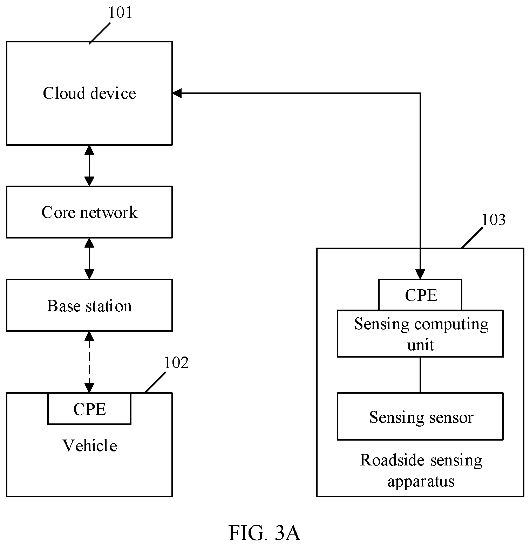

For further understanding of a possible application scenario architecture in embodiments of this application, refer to FIG. 3 as an example. In FIG. 3, software systems such as a fleet management system (fleet management system, FMS), a high-precision map service system, a vehicle dispatching service system, a vehicle operation supervision service system, an emergency takeover service system, and an intelligent driving system are deployed in the cloud device 101. For example, the fleet management system may implement vehicle operation management and/or control by combining information provided by one or more of the high-precision map service system, the vehicle dispatching service system, the vehicle operation supervision service system, the emergency takeover service system, and the intelligent driving system. For example, each service system of the cloud device 101 may receive information from the vehicle 102 and/or the roadside sensing apparatus 103 by using the communication network 104, and integrate the received information into the fleet management system to implement vehicle operation management and/or control. Related management and/or control information is also sent to the vehicle by using the communication network 104, to implement vehicle-road-cloud intelligent driving.

The intelligent driving system (intelligent driving system) may be used to cooperatively implement intelligent driving of the vehicle 102. In embodiments of this application, the intelligent driving system may be used to cooperatively implement an operation that is implemented by the cloud device in the intelligent driving method provided in embodiments of this application. For details, refer to the following descriptions. Details are not described herein.

In FIG. 3, an in-vehicle intelligent driving system is deployed in the vehicle 102. For example, an assisted driving system or an autonomous driving system is deployed. The in-vehicle intelligent driving system may implement functions such as sensing, positioning, decision-making, planning (for example, path planning), or control. These functions may be implemented cooperatively by a sensor such as a radar or a camera, a remote information processor (Telematics BOX, T-BOX) or hardware such as a wire-controlled chassis, and an in-vehicle computing unit. For example, software of the in-vehicle intelligent driving system may be deployed in a vehicle domain controller (vehicle domain controller, VDC), a cockpit domain controller (cockpit domain controller, CDC), a mobile data center (mobile data center, MDC), or another processing control module. This is not limited in embodiments of this application.

In FIG. 3, the roadside sensing apparatus 103 includes a sensor and a sensing computing unit. For details, refer to corresponding descriptions in FIG. 1. Details are not described herein again.

In a possible implementation, in FIG. 3, the vehicle 102 and the roadside sensing apparatus 103 may further include an apparatus configured to communicate with the cloud device 101. For example, a communication apparatus or module such as a customer premises equipment (Customer Premise Equipment, CPE) may be included. The communication apparatus or module may access the communication network 104 to implement communication with the cloud device 101. The communication apparatus or module is not limited in embodiments of this application. For example, a CPE is used as an example. CPE devices are mainly classified into two types: a wired CPE and a wireless CPE. The wired CPE usually uses an ethernet as a data transmission medium and supports access modes such as a passive optical network (passive optical network, PON), a very-high-bit-rate digital subscriber loop (very-high-bit-rate digital subscriber loop, VDSL), and an asymmetric digital subscriber line (asymmetric digital subscriber line, ADSL). The wireless CPE may directly access a 4G or 5G network, or may access a wired network through an external antenna, a wireless AP, a wireless base station, a router, or the like.

In a possible implementation, for example, reference may be made to FIG. 3A. It can be seen from FIG. 3A that the CPE in the roadside sensing apparatus 103 may communicate with the cloud device 101 in a wired communication manner. For example, the CPE in the roadside sensing apparatus 103 and the cloud device 101 may be connected by using an optical fiber, to implement data transmission. In addition, the CPE in the vehicle 102 may access the base station in a wireless manner, and then communicate with the cloud device 101 through a core network. It may be understood that FIG. 3A is merely an example, and does not constitute a limitation on embodiments of this application.

It may be understood that FIG. 3 is merely an example, and does not constitute a limitation on embodiments of this application. In specific implementation, the cloud device 101, the vehicle 102, or the roadside sensing apparatus 103 may include more or fewer hardware components or software units, or may be replaced with a module that can implement a same function, and so on. Specifically, the cloud device, the vehicle, or the roadside sensing apparatus may be configured based on an actual application requirement. This is not limited in embodiments of this application.

In a possible implementation, to reduce deployment costs, the roadside sensing apparatus 103 may be deployed in a driving blind spot road section of a road. The driving blind spot road section includes a road section that goes beyond a sensing range of the vehicle and that is prone to an accident threatening driving safety of the vehicle. For example, the driving blind spot road section may include a curved road section, a road section including an intersection, a road section including an entrance or an exit, a crest road section, or the like. It may be understood that a size of an area range of the driving blind spot road section may be divided based on a specific situation of an actual application scenario. This is not limited in embodiments of this application.

For example, the curved road section may be any curved road section. This is not limited in embodiments of this application.

For example, the road section including an intersection may include, for example, a cross-shaped planar intersection, an annular planar intersection, an X-shaped planar intersection, a T-shaped planar intersection, a Y-shaped planar intersection, a staggered planar intersection, and a multi-leg planar intersection.

For example, the road section including an entrance or an exit may include, for example, an entrance or an exit of a tunnel, an entrance or an exit of a residential area, and an entrance or an exit of a garage or a parking lot.

For example, the crest road section may include an uphill crest road section, a downhill crest road section, or the like.

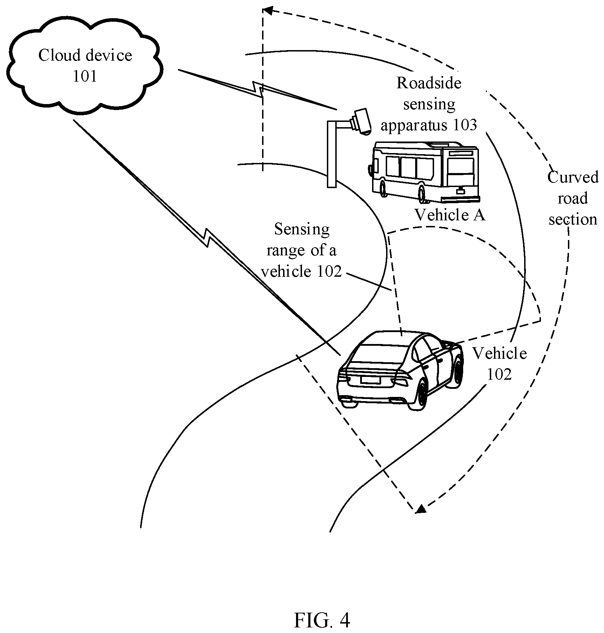

For ease of understanding an application scenario in which the roadside sensing apparatus 103 is deployed in a driving blind spot road section of a road, reference may be made to FIG. 4 to FIG. 8 as examples.

FIG. 4 is an example diagram of an application scenario in which a driving blind spot road section is a curved road section. It can be seen that a sensing range of a vehicle 102 is limited, and the vehicle cannot sense an object (for example, a vehicle A) in the curved road section. Therefore, a roadside sensing apparatus 103 is deployed in the curved road section. A sensing range of the roadside sensing apparatus 103 may cover the curved road section. Therefore, the roadside sensing apparatus can sense an object (for example, the vehicle A) in the curved road section. It may be understood that one or more roadside sensing apparatuses 103 may be deployed in the curved road section (only an example is shown in FIG. 4). A specific quantity of roadside sensing apparatuses to be deployed is not limited in embodiments of this application. In addition, the roadside sensing apparatus 103 may be deployed on any side of the curved road section, or may be deployed on two sides of the curved road section. Specifically, the roadside sensing apparatus is deployed based on an actual application. This is not limited in embodiments of this application.

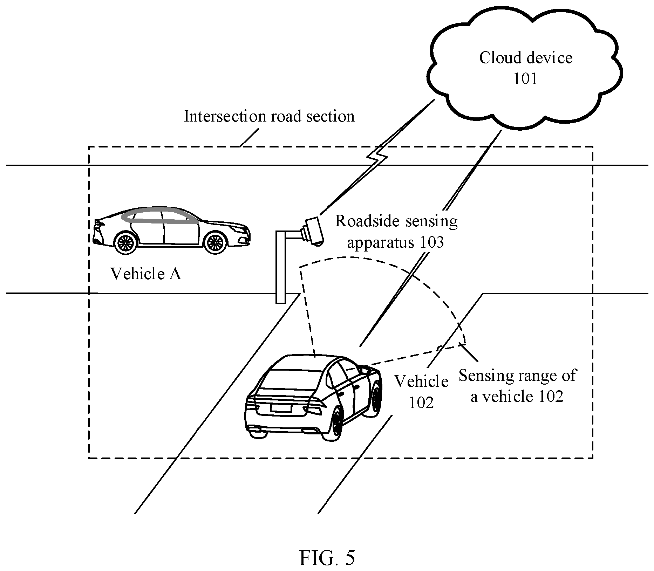

FIG. 5 is an example diagram of an application scenario in which a driving blind spot road section is a road section including an intersection (an intersection road section for short). It can be seen that the sensing range of the vehicle 102 is limited, and the vehicle cannot sense an object (for example, the vehicle A) in the intersection road section. Therefore, the roadside sensing apparatus 103 is deployed in the intersection road section. The sensing range of the roadside sensing apparatus 103 may cover the intersection road section. Therefore, the roadside sensing apparatus can sense an object (for example, the vehicle A) in the intersection road section. It may be understood that one or more roadside sensing apparatuses 103 may be deployed in the intersection road section (only an example is shown in FIG. 5). A specific quantity of roadside sensing apparatuses to be deployed is not limited in embodiments of this application. In addition, the roadside sensing apparatus 103 may be deployed at any location on two sides of the road in the intersection road section. Specifically, the roadside sensing apparatus is deployed based on an actual application. This is not limited in embodiments of this application.

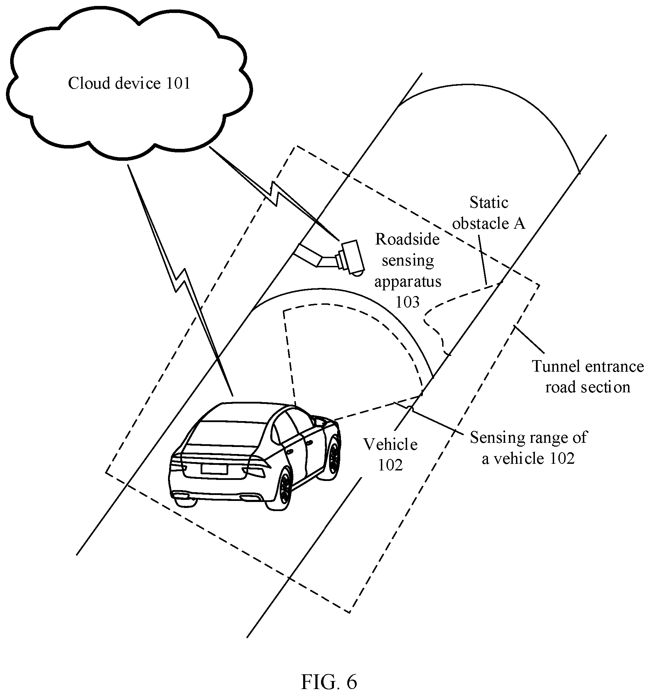

FIG. 6 is an example diagram of an application scenario in which a driving blind spot road section is a road section including a tunnel entrance. It can be seen that the sensing range of the vehicle 102 is limited, and the vehicle cannot sense an object (for example, a static obstacle A) in the tunnel entrance road section. Therefore, the roadside sensing apparatus 103 is deployed in the tunnel entrance road section. The sensing range of the roadside sensing apparatus 103 may cover the tunnel entrance road section, and therefore the roadside sensing apparatus can sense an object (for example, the static obstacle A) in the tunnel entrance road section. It may be understood that one or more roadside sensing apparatuses 103 may be deployed in the tunnel entrance road section (only an example is shown in FIG. 6). A specific quantity of roadside sensing apparatuses to be deployed is not limited in embodiments of this application. In addition, the roadside sensing apparatus 103 may be deployed at any location on two sides of the road in the tunnel entrance road section. Specifically, the roadside sensing apparatus is deployed based on an actual application. This is not limited in embodiments of this application.

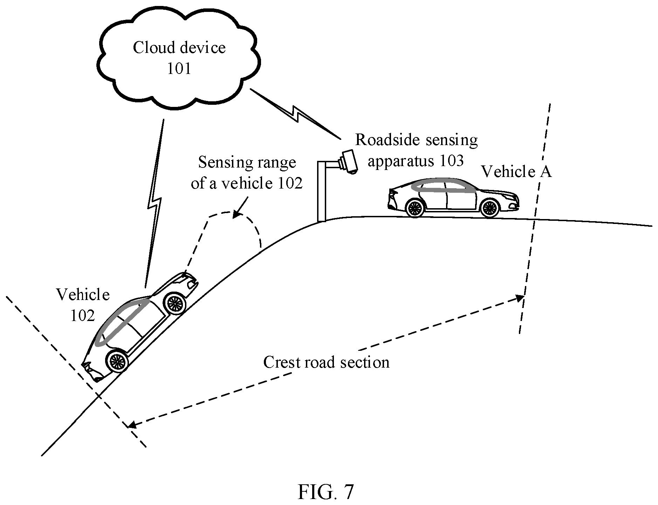

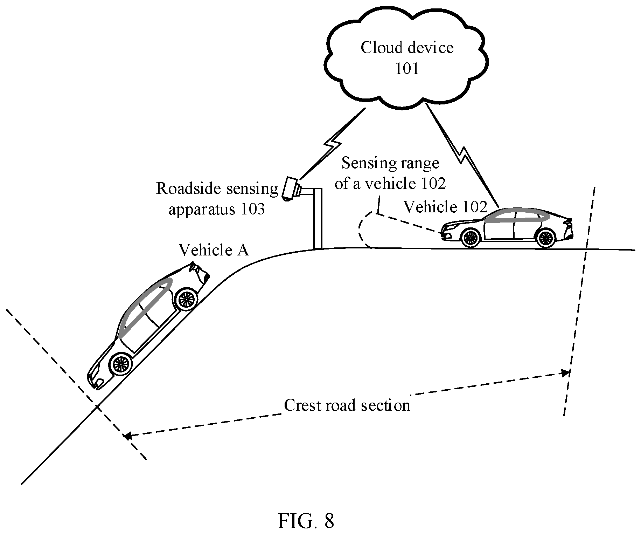

FIG. 7 and FIG. 8 are example diagrams of an application scenario in which a driving blind spot road section is a road section including a crest. FIG. 7 is a diagram of an uphill scenario of the vehicle 102, and FIG. 8 is a diagram of a downhill scenario of the vehicle 102. It can be seen that the sensing range of the vehicle 102 is limited, and the vehicle cannot sense an object (for example, the vehicle A) in the crest road section. Therefore, the roadside sensing apparatus 103 is deployed in the crest road section. The sensing range of the roadside sensing apparatus 103 may cover the crest road section. Therefore, the roadside sensing apparatus can sense an object (for example, the vehicle A) in the crest road section. It may be understood that one or more roadside sensing apparatuses 103 may be deployed in the crest road section (only an example is shown in FIG. 6). A specific quantity of roadside sensing apparatuses to be deployed is not limited in embodiments of this application. In addition, the roadside sensing apparatus 103 may be deployed at any location on two sides of the road in the crest road section. Specifically, the roadside sensing apparatus is deployed based on an actual application. This is not limited in embodiments of this application.

As shown in FIG. 4 to FIG. 8, the vehicle 102 is mainly on the driving blind spot road section. In another implementation, the vehicle 102 may travel in a road area outside the driving blind spot road section, for example, in a case in which the vehicle 102 travels toward the driving blind spot road section but has not entered the driving blind spot road section.

It may be understood that the application scenarios shown in FIG. 4 to FIG. 8 are merely examples, and do not constitute a limitation on embodiments of this application. In specific implementation, another application scenario of the driving blind spot road section may be further included, which is not listed one by one in embodiments of this application.

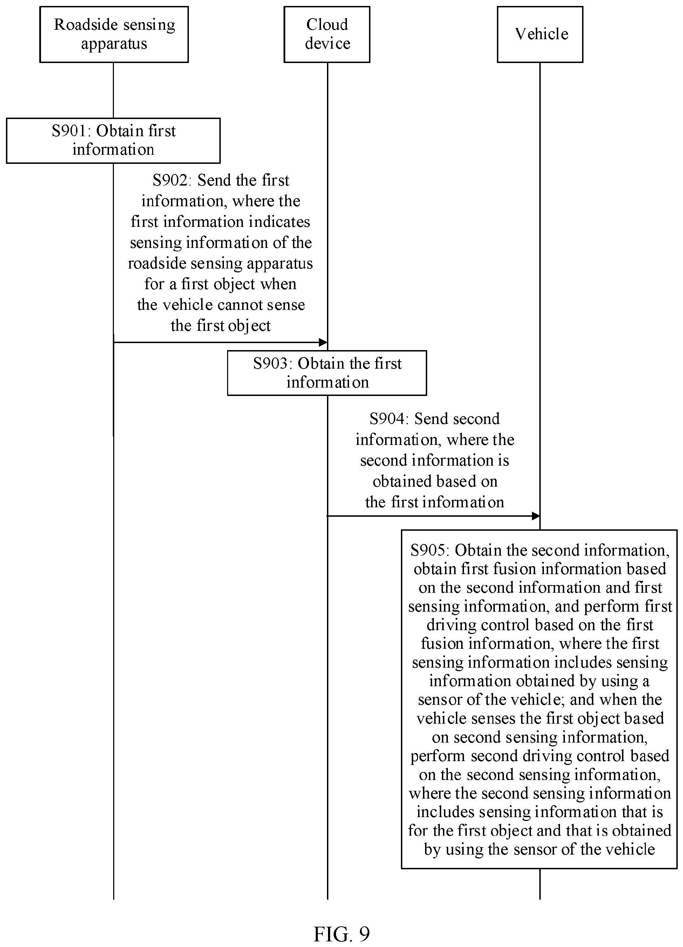

For example, with reference to the collaborative driving system described above, the following describes the method provided in embodiments of this application. Referring to FIG. 9 as an example, the method may include but is not limited to the following steps.

S901: A roadside sensing apparatus obtains first information.

For example, the roadside sensing apparatus may be, for example, the roadside sensing apparatus 103 in the foregoing collaborative driving system 100. The vehicle may be, for example, the vehicle 102 in the collaborative driving system 100. The vehicle may be a vehicle traveling toward a driving blind spot road section. The driving blind spot road section may be, for example, any one of the driving blind spot road sections described above, and details are not described herein again. The roadside sensing apparatus is deployed on the driving blind spot road section. For a specific deployment application scenario, refer to FIG. 4 or FIG. 8 as an example. Details are not described herein again. For example, the roadside sensing apparatus may include one or more sensing apparatuses deployed in the driving blind spot road section.

In specific implementation, a sensing range of the roadside sensing apparatus may cover the driving blind spot road section, so that the roadside sensing apparatus can sense an object (including the foregoing first object, where the first object may be, for example, one or more objects in the driving blind spot road section) in the driving blind spot road section. For example, the objects in the driving blind spot road section may include a moving object and a still object. The moving object includes, for example, a vehicle, a pedestrian, an animal, or any object moving in the driving blind spot road section. The still object includes, for example, a static obstacle such as a mound in the driving blind spot road section, a signboard temporarily intercepted due to construction or the like, a vehicle that stops traveling due to an accident, or another object placed on a road. It may be understood that the object described herein is merely an example, and does not constitute a limitation on embodiments of this application. In specific implementation, another object may be further included. This is not limited in embodiments of this application.

For example, in a possible implementation, a sensor in the roadside sensing apparatus may detect an object in the driving blind spot road section to obtain detection data. For example, if the sensor is a camera, the detection data may be image data obtained through shooting by the camera. Alternatively, for example, if the sensor is a radar, the detection data may be point cloud data detected by the radar. In other words, the detection data is original sensing data of the roadside sensing apparatus. It may be understood that the description of the detection data herein is merely an example, and does not constitute a limitation on embodiments of this application.

In a possible implementation, after obtaining the detection data, the sensor sends the detection data to a sensing computing unit in the roadside sensing apparatus. The sensing computing unit processes and analyzes the detection data. The detection data includes data obtained by detecting the foregoing first object in the driving blind spot road section. The following uses the first object as an example for description.

After analyzing and processing the detection data, the sensing computing unit may extract one or more pieces of sensing information of a location, a moving speed, a moving direction, a type (for example, a vehicle or a pedestrian), and an identifier of the first object. The specific analyzing and processing method may be, for example, any one or more methods for extracting the sensing information of the object from the image data or the point cloud data. This is not limited in embodiments of this application.

For example, in a possible implementation, the foregoing first information may include one or more pieces of the sensing information extracted above. Optionally, the first information may further include sensing confidence level information of the sensor. Optionally, if the first object is a vehicle, the first information may further include event information corresponding to the first object. The event information may be, for example, event information determined in a vehicle to everything (vehicle to everything, V2X) technology. For ease of subsequent description, the first information may be referred to as sensing information obtained after analyzing and processing.

In another possible implementation, the foregoing first information includes detection data of the roadside sensing apparatus for the first object, that is, includes original sensing data of the first object. Similarly, optionally, the first information may further include sensing confidence level information of the sensor, event information corresponding to the first object, and/or the like. For ease of subsequent description, the first information may be referred to as sensing information that is not analyzed or processed. An advantage of this implementation is that the roadside sensing apparatus does not need to perform information extraction processing, thereby reducing processing complexity of the roadside sensing apparatus.

It may be understood that the foregoing listed content included in the first information is merely an example, and does not constitute a limitation on embodiments of this application.

S902: The roadside sensing apparatus sends the first information to a cloud device, where the first information indicates sensing information of the roadside sensing apparatus for the first object when the vehicle cannot sense the first object.

For example, after the roadside sensing apparatus obtains the first information, the roadside sensing apparatus may send the first information to the cloud device by using a communication module or apparatus (for example, the foregoing CPE).

In a possible implementation, when the first object is located outside a sensing range of the vehicle (that is, the vehicle cannot sense the first object), the roadside sensing apparatus sends the first information to the cloud device. For example, in this case, both the vehicle and the first object are located in the driving blind spot road section. Therefore, the roadside sensing apparatus can sense the vehicle. For ease of understanding, for example, reference may be made to any diagram of an application scenario in FIG. 4 to FIG. 8 as an example. The first object may be, for example, an object A in the figure (for example, a vehicle A or a static obstacle A in the figure), and the vehicle may be a vehicle 102 in the figure. Because the vehicle is located in the driving blind spot road section, the roadside sensing apparatus can sense the vehicle, and obtain sensing information of the vehicle. Then, a distance between the vehicle and the first object may be calculated based on the sensing information of the vehicle and the first information. A specific distance calculation manner is not limited in embodiments of this application. Then, a value of the distance is determined. If the distance is greater than a preset distance, it may be determined that the first object is outside the sensing range of the vehicle. For example, the preset distance may be, for example, a sensing distance of the vehicle, or may be a customized distance. After determining that the first object is outside the sensing range of the vehicle, the roadside sensing apparatus sends the first information to the cloud device. In this way, unnecessary sending of redundant data is reduced, and transmission bandwidth is saved.

In a possible implementation, when the first object meets the first condition, the roadside sensing apparatus sends the first information to the cloud device. For example, the first condition may include that a distance between the first object and the vehicle is less than or equal to a first preset distance, and/or include that a time-to-collision (time-to-collision, TTC) between the first object and the vehicle is less than or equal to first preset duration. For example, in specific implementation, the first object is located outside the sensing range of the vehicle, and the roadside sensing apparatus does not necessarily send the first information to the cloud device. Instead, when the first object is located outside the sensing range of the vehicle and may threaten driving safety of the vehicle (for example, when the first object meets the first condition), the first information is sent to the cloud device.

For example, the first preset distance and/or the first preset duration may be set based on an actual application requirement. This is not limited in embodiments of this application. In this implementation, unnecessary sending of redundant data can be further reduced, and transmission bandwidth can be saved.

In a possible implementation, the roadside sensing apparatus may send the first information to the cloud device based on a preset format structure. For example, the roadside sensing apparatus may encapsulate the first information into a packet or a message and send the packet or the message to the cloud device. For example, the first information may be encapsulated into a roadside safety message (roadside safety message, RSM) and sent to the cloud device.

S903: The cloud device obtains the first information.

After the roadside sensing apparatus sends the first information to the cloud device, the cloud device may receive the first information.

S904: The cloud device sends second information to the vehicle, where the second information is obtained based on the first information.

The cloud device receives the first information, may obtain the second information based on the first information, and then may send the second information to the vehicle.

For example, in a possible implementation, if the first information is the foregoing sensing information that is not analyzed or processed, the cloud device may analyze and process the original sensing data in the first information, and extract one or more pieces of sensing information of the location, the moving speed, the moving direction, the type, and the identifier of the first object. In this case, the second information includes the one or more pieces of sensing information. Alternatively, the first information may be directly sent to the vehicle as the second information. This is not limited in embodiments of this application.

In another possible implementation, if the first information is the foregoing sensing information obtained after analyzing and processing, the cloud device may send the first information to the vehicle as the second information. Alternatively, some data may be selected from the first information and sent to the vehicle. This is not limited in embodiments of this application.

In a possible implementation, when the first object meets a second condition, the cloud device sends the second information to the vehicle. The second condition includes that the distance between the first object and the vehicle is less than or equal to a second preset distance, and/or includes that a time-to-collision between the first object and the vehicle is less than or equal to second preset duration.

For example, in specific implementation, the vehicle may send driving state information of the vehicle to the cloud device. The driving state information may include one or more pieces of information such as a location, a traveling speed, a moving direction (or a traveling direction), a type, and an identifier of the vehicle. It may be understood that the driving state information described herein is merely an example, and does not constitute a limitation on embodiments of this application. After receiving the driving state information of the vehicle, the cloud device may calculate the distance between the vehicle and the first object, and/or calculate the time-to-collision between the vehicle and the first object based on the driving state information and the received first information. For example, the cloud device may calculate the distance and/or the time-to-collision with reference to a high-precision map. A specific calculation implementation process is not limited in embodiments of this application. When the distance is less than or equal to the second preset distance, and/or the time-to-collision is less than or equal to the second preset duration, the cloud device sends the second information to the vehicle. For example, the second preset distance and/or the second preset duration may be set based on an actual application requirement. This is not limited in embodiments of this application. In this implementation, unnecessary sending of redundant data can be reduced, and transmission bandwidth can be saved.

S905: The vehicle obtains the second information, obtains first fusion information based on the second information and first sensing information, and performs first driving control based on the first fusion information, where the first sensing information includes sensing information obtained by using an onboard sensor of a vehicle; and when the vehicle senses the first object based on second sensing information, performs second driving control based on the second sensing information, where the second sensing information includes sensing information that is for the first object and that is obtained by using the onboard sensor of the vehicle.

In a possible implementation, an operation that is performed by the vehicle and that is described in embodiments of this application may be performed by a controller of the vehicle. For example, the operation may be executed by a VDC, a CDC, an MDC, or another controller on which the software of the in-vehicle intelligent driving system shown in FIG. 3 is deployed.

For example, the onboard sensor of the vehicle also constantly detects a surrounding road surface condition to obtain the sensing information of the vehicle. After receiving the second information from the cloud device, the vehicle may implement information fusion based on the second information and the sensing information of the vehicle.

In a possible implementation, the vehicle may fuse the second information and the sensing information of the vehicle into a high-precision map. For example, any sensing information fusion method may be used to fuse the second information and the sensing information of the vehicle. The sensing information fusion method is not limited in embodiments of this application. After the fused high-precision map is obtained, intelligent driving control of the vehicle is implemented based on the fused high-precision map. For example, the vehicle can sense presence of the first object based on the fused high-precision map, and therefore may calculate the distance and/or the time-to-collision between the vehicle and the first object. Then, operation control such as deceleration or lane change is performed based on the distance and/or the time-to-collision, to implement safe driving.

In another specific implementation, the vehicle may fuse the second information and the sensing information of the vehicle into a customized map. Similarly, presence of the first object can be sensed based on the fused map, and then operation control such as deceleration or lane change is performed based on the distance and/or the time-to-collision between the vehicle and the first object, thereby implementing safe driving.

In a possible implementation, if the first object enters the sensing range of the vehicle, that is, after sensing the first object, the vehicle may perform driving control based on the sensing information of the vehicle. In this case, the sensing information of the vehicle includes the sensing information of the first object. There is no need to perform a fusion operation on the roadside sensing data and the sensing data of the vehicle. In addition to saving computing resources, a confidence level of using the sensing data of the vehicle is higher, so as to perform more reasonable and accurate driving control and reduce a risk of a safety accident.

In another possible implementation, after the vehicle can sense the first object, the vehicle may still receive, from the cloud device, the sensing information (third information for short) of the roadside sensing apparatus for the first object. Then, the third information and the sensing information of the vehicle may be fused based on a weight, and corresponding driving control is performed based on the fused sensing information. For example, a weight of the sensing information of the vehicle is greater than a weight of the third information. For example, the weight may be represented by a percentage, a score, or the like. This is not limited in embodiments of this application. For example, in specific implementation, the sensing information of the vehicle and the third information may be fused by using a sensing fusion model such as a machine learning model or a deep learning model. For example, an input of the sensing fusion model may include the sensing information of the vehicle (including the sensing information of the first object), the third information, and weights (or weighting factors) of the two pieces of information, and an output is the fused sensing information. Therefore, driving control may be performed based on the fused sensing information. In this implementation, on one hand, the sensing range of the vehicle is expanded by using the roadside sensing information, and on the other hand, a weight of the onboard sensing of the vehicle is relatively high, so that a confidence level of sensing fusion can be improved.

In a possible implementation, the roadside sensing apparatus has a relatively high sensing confidence level of the vehicle, and a relatively low sensing confidence level of the pedestrian. Therefore, if the roadside sensing information that is forwarded by the cloud device and that is received by the vehicle includes the sensing information of the vehicle, the vehicle may fuse the sensing information of the vehicle with the sensing information of the vehicle. For example, the first object includes one or more target vehicles, and the second information includes sensing information of the roadside sensing apparatus for the one or more target vehicles. If the roadside sensing information that is forwarded by the cloud device and that is received by the vehicle includes the sensing information of the pedestrian, the sensing information of the pedestrian may be discarded and not used, to reduce interference to subsequent fusion and driving control. For example, whether the second information is the sensing information of the pedestrian or the sensing information of the vehicle may be determined by using a type in the second information.

In a possible implementation, after the first object enters the sensing range of the vehicle, the vehicle may detect the first object, and obtain sensing information (second sensing information for short) of the first object. For example, the second sensing information may also include one or more pieces of information of a location, a moving speed, a moving direction, a type, and an identifier of the first object.

In addition, after the first object enters the sensing range of the vehicle, the vehicle may still receive, from the cloud device, sensing information (fourth information for short) of the first object detected by the roadside sensing apparatus. Then, the vehicle may calibrate the fourth information based on the sensing information of the vehicle for the first object, to obtain a calibration result. For example, the fourth information also indicates one or more pieces of information of a location, a moving speed, a moving direction, a type, and an identifier of the first object. Alternatively, the vehicle may obtain one or more pieces of information of a location, a moving speed, a moving direction, a type, and an identifier of the first object by analyzing and processing the sensing information of the first object.

For example, in a possible implementation, data association may be performed by using a Euclidean distance algorithm or a Mahalanobis distance algorithm, to implement matching between the first object sensed by the roadside apparatus and the first object sensed by the vehicle. Then, the vehicle may compare the fourth information with the sensing information of the vehicle for the first object, to obtain deviation information of the sensing information. For example, the fourth information may be compared with location information in the sensing information of the vehicle for the first object, to obtain a location deviation. Optionally, the fourth information may be further compared with a moving speed in the sensing information of the vehicle for the first object, to obtain a speed deviation and the like. The one or more deviations form deviation information of the sensing information, and the deviation information is the foregoing calibration result.

Alternatively, for example, in another possible implementation, the vehicle may first fuse the sensing information of the vehicle for the first object and the fourth information into a map (for example, a high-precision map or a customized map) of the vehicle. Then, the vehicle may obtain one or more pieces of information of a location, a moving speed, a moving direction, a type, and an identifier of the first object based on the fused map. The information is referred to as fused sensing information for short. Then, the vehicle may compare the fourth information with the fused sensing information, to obtain deviation information of the sensing information. For example, the fourth information may be compared with the location information in the fused sensing information to obtain a location deviation. Optionally, the fourth information may be further compared with a moving speed in the fused sensing information, to obtain a speed deviation and the like. The one or more deviations form deviation information of the sensing information, and the deviation information is the foregoing calibration result.

After obtaining the calibration result, the vehicle may send the calibration result to the cloud device. Then, the cloud device sends the calibration result to the roadside sensing apparatus. After receiving the calibration result, the roadside sensing apparatus calibrates the sensing confidence level of the roadside sensing apparatus based on the calibration result. For example, the roadside sensing apparatus may input the calibration result as a calibration parameter into a sensing model of a sensing computing unit of the roadside sensing apparatus, to implement parameter correction of the sensing model. Therefore, a sensing confidence level of the roadside sensing apparatus is calibrated.

In a possible implementation, if the roadside sensing apparatus senses that the first object leaves the driving blind spot road section, or senses that the first object enters the sensing range of the vehicle. The roadside sensing apparatus may send fifth information to the cloud device.

For example, if the roadside sensing apparatus fails to detect presence of the first object in the detection information detected by the sensor, for example, fails to extract the sensing information of the first object, the roadside sensing apparatus may determine that the first object leaves the driving blind spot road section. In this case, the fifth information is used to indicate that the first object leaves the driving blind spot road section. For example, the fifth information may be null data, or may be preset first indication mark information or the like. This is not limited in embodiments of this application.

For example, the roadside sensing apparatus extracts the sensing information of the first object and the vehicle from the detection information detected by the sensor, and then calculates a distance between the first object and the vehicle. If the distance is less than a preset distance, it may be determined that the first object enters the sensing range of the vehicle. In this case, the fifth information is used to indicate that the first object enters the sensing range of the vehicle. For example, the fifth information may be preset second indication mark information or the like. This is not limited in embodiments of this application. For example, the second indication mark information may be the same as or different from the first indication mark information.

After receiving the fifth information, the cloud device can learn that the first object leaves the driving blind spot road section, or the first object enters the sensing range of the vehicle. If the first object leaves the driving blind spot road section, it indicates that the first object does not (or temporarily does not) pose a threat to driving safety of the vehicle. If the first object enters the sensing range of the vehicle, the vehicle performs processing based on the sensing information of the vehicle. Therefore, the cloud device may generate sensing fusion disabling information based on the fifth information, and send the sensing fusion disabling information to the vehicle. After receiving the sensing fusion disabling information, the vehicle resumes a vehicle-based sensing driving mode according to an indication of the information, and disables a function of performing fusion with the sensing information of the first object detected by the roadside sensing apparatus.

For example, in a possible implementation, the first object is a last object leaving the driving blind spot road section, and the foregoing fusion disabling operation is triggered only in this case. In other words, there is no object that threatens driving safety of the vehicle in the driving blind spot road section. In this case, the roadside detection apparatus may send null data to the cloud device. For example, data in a packet or a message sent to the cloud device is empty. After receiving the null data, the cloud device may send the foregoing sensing fusion disabling information to the vehicle. After the first object leaves the driving blind spot road section, if there is another object in the driving blind spot road section, especially an object that threatens driving safety of the vehicle, the foregoing fusion disabling operation is not triggered.

In a possible implementation, if the driving blind spot road section includes a traffic light, the roadside sensing apparatus may further obtain traffic indication information of the traffic light, and send the traffic indication information to the cloud device. The traffic indication information may be, for example, phase information of the traffic light. After receiving the traffic indication information, the cloud device may dynamically calculate information such as an optimal route and/or speed for the vehicle with reference to location information of the vehicle, and send the information to the vehicle. After receiving the information, the vehicle may complete corresponding driving control based on the information, for example, travel based on the optimal route and/or speed.

In a possible implementation, the cloud device may send the calculated information such as the optimal route and/or speed to the vehicle only when the information such as the optimal route and/or speed changes compared with the information reported by the vehicle. In this way, transmission bandwidth is saved.

In conclusion, in embodiments of this application, a roadside sensing apparatus is deployed in a blind spot road section of a road, instead of continuously deploying a large quantity of sensing apparatuses on the road. In addition, a vehicle does not communicate with the roadside sensing apparatus, but information exchange between a vehicle and a road is implemented through a cloud, so that no OBU needs to be deployed in the vehicle, and no expensive RSU needs to be used on a roadside, thereby greatly reducing costs. In addition, the roadside sensing apparatus is considered as an extension of a sensing apparatus of the vehicle. To be specific, information sensed by the roadside sensing apparatus is directly sent to the vehicle through the cloud, and the vehicle fuses the received sensing information and information sensed by the sensing apparatus of the vehicle, to expand a sensing range of the vehicle and reduce a potential driving safety hazard. In other words, this solution provides a vehicle-road collaboration solution that can effectively reduce a potential driving safety hazard for a vehicle, reduce implementation costs, and facilitate promotion and use.

The foregoing mainly describes the method provided in embodiments of this application. It may be understood that, to implement the corresponding functions, the control units or devices include corresponding hardware structures and/or software modules for performing the functions. In combination with example units and steps described in embodiments disclosed herein, this application can be implemented by hardware or a combination of hardware and computer software. Whether a specific function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the device may be divided into functional modules based on the foregoing method examples. For example, each functional module corresponding to each function may be obtained through division, or two or more functions may be integrated into one module. The integrated module may be implemented in a form of hardware, or may be implemented in a form of a software functional module. It should be noted that, in embodiments of this application, division into the modules is an example and is merely logical function division, and may be other division in an actual implementation.

When each functional module is obtained through division based on each corresponding function, an embodiment of this application further provides an apparatus configured to implement any one of the foregoing methods. For example, the provided apparatus includes a unit (or means) configured to implement the steps in any one of the foregoing methods.

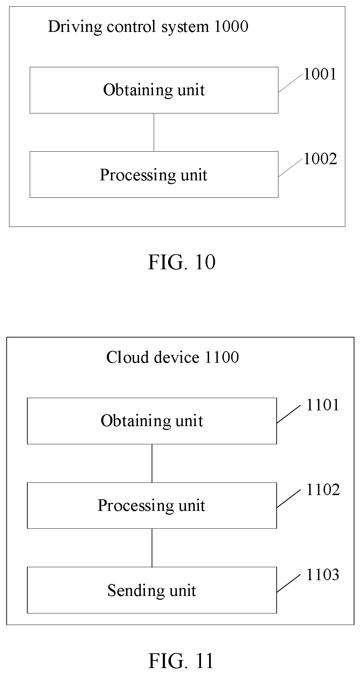

For example, FIG. 10 is a diagram of a structure of a driving control system 1000 according to an embodiment of this application. The driving control system 1000 shown in FIG. 10 may be a driving control system in the vehicle in any embodiment of the foregoing method. The driving control system 1000 may include an obtaining unit 1001 and a processing unit 1002.

The obtaining unit 1001 is configured to obtain first information from a cloud device, where the first information includes sensing information of a roadside sensing apparatus for a first object.

The processing unit 1002 is configured to: obtain first fusion information based on the first information and first sensing information, and perform first driving control based on the first fusion information, where the first sensing information includes sensing information obtained by using an onboard sensor of a vehicle.

The processing unit 1002 is further configured to: when the vehicle senses the first object based on second sensing information, perform second driving control based on the second sensing information, where the second sensing information includes sensing information that is for the first object and that is obtained by using the onboard sensor of the vehicle.

In a possible implementation, the first object includes one or more target vehicles, and the first information includes sensing information of the roadside sensing apparatus for the one or more target vehicles.

In a possible implementation, the obtaining unit 1001 is further configured to obtain second information from the cloud device, where the second information indicates sensing information of the roadside sensing apparatus for the second object, and the second object includes one or more pedestrians.

The processing unit 1002 is further configured to discard the second information.

In a possible implementation, the obtaining unit 1001 is further configured to obtain third information from the cloud device, where the third information indicates the sensing information of the roadside sensing apparatus for the first object when the vehicle senses the first object.

The processing unit 1002 is specifically configured to:
implement information fusion on the third information and the second sensing information based on a preset weight, to obtain second fusion information, where a weight of the second sensing information is greater than a weight of the third information; and
perform the second driving control based on the second fusion information.

In a possible implementation, the obtaining unit 1001 is further configured to obtain fourth information from the cloud device, where the fourth information indicates the sensing information of the roadside sensing apparatus for the first object when the vehicle senses the first object.

The processing unit 1002 is further configured to calibrate the fourth information based on the second sensing information, to obtain a calibration result.

The vehicle further includes a sending unit, configured to send the calibration result, where the calibration result is used to correct a sensing confidence level of the roadside sensing apparatus.

In a possible implementation, the obtaining unit 1001 is further configured to: when the vehicle senses the first object, or when the first object leaves the sensing range of the roadside sensing apparatus,
obtain fifth information from the cloud device, where the fifth information indicates the vehicle to disable a roadside sensing fusion function, and the roadside sensing fusion function is a function of fusing the sensing information of the roadside sensing apparatus and the sensing information of the vehicle.

In a possible implementation, the obtaining unit 1001 is specifically configured to:
obtain the first information when the vehicle cannot sense the first object, and the first object meets a first condition.

The first condition includes: a distance between the first object and the vehicle is less than or equal to a first preset distance, and/or a time-to-collision between the first object and the vehicle is less than or equal to first preset duration.

For specific operations and beneficial effects of the units in the driving control system 1000 shown in FIG. 10, refer to the corresponding descriptions in FIG. 9 and the possible embodiments thereof. Details are not described herein again.

For example, FIG. 11 is a diagram of a structure of a cloud device 1100 according to an embodiment of this application. The cloud device 1100 shown in FIG. 11 may be a cloud device configured to implement any embodiment of the foregoing method. The cloud device 1100 may include an obtaining unit 1101, a processing unit 1102, and a sending unit 1103.

The obtaining unit 1101 is configured to obtain vehicle state information from a vehicle, where the vehicle state information includes location information and speed information of the vehicle.

The obtaining unit 1101 is further configured to obtain first information, where the first information indicates sensing information of a roadside sensing apparatus for a first object.

The processing unit 1102 is configured to determine, based on the vehicle state information and the first information, that the first object meets a first condition, where the first condition includes: a distance between the first object and the vehicle is less than or equal to a first preset distance, and/or a time-to-collision between the first object and the vehicle is less than or equal to first preset duration.

The sending unit 1103 is configured to send the first information to the vehicle.

In a possible implementation, the obtaining unit 1101 is further configured to obtain second information from the roadside sensing apparatus, where the second information indicates the sensing information of the roadside sensing apparatus for the first object when the vehicle senses the first object.

The sending unit 1103 is further configured to send the second information to the vehicle.

The obtaining unit 1101 is further configured to obtain third information from the vehicle, where the third information is a calibration result obtained by calibrating the second information based on sensing information of the vehicle.

The sending unit 1103 is further configured to send the calibration result to the roadside sensing apparatus, where the calibration result is used to correct a sensing confidence level of the roadside sensing apparatus.

In a possible implementation, the sending unit 1103 is further configured to: when the vehicle senses the first object, or when the first object leaves the sensing range of the roadside sensing apparatus,
send fourth information to the vehicle, where the fourth information indicates the vehicle to disable a roadside sensing fusion function, and the roadside sensing fusion function is a function of fusing the sensing information of the roadside sensing apparatus and the sensing information of the vehicle.

In a possible implementation, the obtaining unit 1101 is further configured to obtain fifth information from the roadside sensing apparatus, where the fifth information indicates that the first object leaves the sensing range of the roadside sensing apparatus.

The processing unit 1102 is further configured to trigger, based on the fifth information, an operation of sending the fourth information to the vehicle.

For specific operations and beneficial effects of the units in the cloud device 1100 shown in FIG. 11, refer to the corresponding descriptions in FIG. 9 and the possible embodiments thereof. Details are not described herein again.

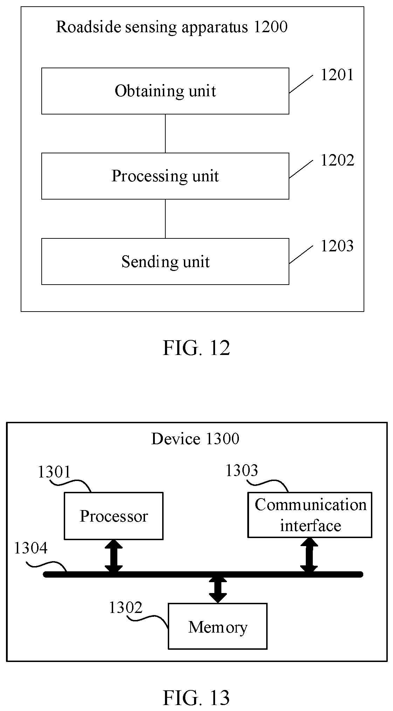

For example, FIG. 12 is a diagram of a structure of a roadside sensing apparatus 1200 according to an embodiment of this application. The roadside sensing apparatus 1200 shown in FIG. 12 may be a roadside sensing apparatus configured to implement any embodiment of the foregoing method. The roadside sensing apparatus 1200 may include an obtaining unit 1201, a processing unit 1202, and a sending unit 1203.

The obtaining unit 1201 is configured to obtain first sensing information, where the first sensing information includes sensing information of a first object and sensing information of a vehicle.

The processing unit 1202 is configured to identify, based on the first sensing information, that the first object threatens driving safety of the vehicle.

The sending unit 1203 is configured to send first information to a cloud device, where the first information indicates sensing information of the roadside sensing apparatus for the first object, and the first information is sent to the vehicle.

In a possible implementation, the sending unit 1203 is further configured to send second information to the cloud device, where the second information indicates the sensing information of the roadside sensing apparatus for the first object when the vehicle senses the first object.

The roadside sensing apparatus further includes an obtaining unit, configured to obtain a calibration result from the cloud device, where the calibration result is used to correct a sensing confidence level of the roadside sensing apparatus, and the calibration result is a calibration result obtained by the vehicle by calibrating the second information based on sensing information of the vehicle.

In a possible implementation, the sending unit 1203 is further configured to:
send third information to the cloud device, where the third information indicates that the first object leaves a sensing range of the roadside sensing apparatus, the third information is used to trigger the cloud device to send fourth information to the vehicle, the fourth information indicates the vehicle to disable a roadside sensing fusion function, and the roadside sensing fusion function is a function of fusing the sensing information of the first object and the sensing information of the vehicle by the roadside sensing apparatus.

For specific operations and beneficial effects of the units in the roadside sensing apparatus 1200 shown in FIG. 12, refer to the corresponding descriptions in FIG. 9 and the possible embodiments thereof. Details are not described herein again.

It should be understood that division into the units in the vehicle, the cloud device, or the roadside sensing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the units in the apparatus may be implemented in a form of a hardware circuit, and functions of some or all of the units may be implemented through design of the hardware circuit. The hardware circuit may be understood as one or more processors. For example, in an implementation, the hardware circuit is an application-specific integrated circuit (application-specific integrated circuit, ASIC), and the functions of some or all of the units are implemented through design of a logical relationship between elements in the circuit. For another example, in another implementation, the hardware circuit may be implemented by a programmable logic device (programmable logic device, PLD), for example, a field programmable gate array (field programmable gate array, FPGA). The field programmable gate array may include a large quantity of logic gate circuits, and a connection relationship between the logic gate circuits is configured based on a configuration file, to implement the functions of some or all of the units. All the units of the apparatus may be implemented in the form of software invoked by the processor, or may be implemented in the form of a hardware circuit, or some of the units are implemented in the form of software invoked by the processor, and remaining units are implemented in the form of a hardware circuit.

In embodiments of this application, the processor is a circuit with a data processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

For example, FIG. 13 is a diagram of a structure of a possible physical entity of a device according to this application. A device 1300 shown in FIG. 13 may be the vehicle, the cloud device, or the roadside sensing apparatus in the method in the foregoing embodiments. The device 1300 includes a processor 1301, a memory 1302, and a communication interface 1303. The processor 1301, the communication interface 1303, and the memory 1302 may be connected to each other, or may be connected to each other through a bus 1304.

For example, the memory 1302 is configured to store a computer program and data of the device 1300. The memory 1302 may include but is not limited to a random access memory (random access memory, RAM), a read-only memory (read-only memory, ROM), an erasable programmable read-only memory (erasable programmable read only memory, EPROM), a portable read-only memory (compact disc read-only memory, CD-ROM), and the like.

Software or program code required for all or some of the functions of the device in the foregoing method embodiments is stored in the memory 1302.

In a possible implementation, if software or program code required for some of the functions is stored in the memory 1302, the processor 1301, in addition to invoking the program code in the memory 1302 to implement some of the functions, may cooperate with another component (for example, the communication interface 1303) to jointly complete another function (for example, a data receiving or sending function) described in the method embodiments.

There may be a plurality of communication interfaces 1303, and the communication interfaces are configured to support the device 1300 in performing communication, for example, receiving or sending data or a signal.

For example, the processor 1301 may be a CPU, a GPU, an NPU, a TPU, a DPU, a microprocessor, a DSP, an ASIC, an FPGA, or a combination of at least two of these processor forms described above. The processor 1301 may be configured to read a program stored in the memory 1302, to perform the operations performed by the corresponding device in the method in FIG. 9 and the possible embodiments thereof.

For specific operations and beneficial effects of the units in the device 1300 shown in FIG. 13, refer to the corresponding descriptions in FIG. 9 and the possible embodiments thereof. Details are not described herein again.

An embodiment of this application further provides a chip. The chip includes a processor and a memory. The memory is configured to store a computer program or computer instructions, and the processor is configured to execute the computer program or the computer instructions stored in the memory, to enable the chip to perform the operations performed by the vehicle in FIG. 9 and the possible embodiments thereof.

An embodiment of this application further provides a chip. The chip includes a processor and a memory. The memory is configured to store a computer program or computer instructions, and the processor is configured to execute the computer program or the computer instructions stored in the memory, to enable the chip to perform the operations performed by the cloud device in FIG. 9 and the possible embodiments thereof.

An embodiment of this application further provides a chip. The chip includes a processor and a memory. The memory is configured to store a computer program or computer instructions, and the processor is configured to execute the computer program or the computer instructions stored in the memory, to enable the chip to perform the operations performed by the roadside sensing apparatus in FIG. 9 and the possible embodiments thereof.

An embodiment of this application further provides a computer-readable storage medium. The computer-readable storage medium stores a computer program or computer instructions, and the computer program or the computer instructions are executed by a processor to implement the method implemented by the vehicle in FIG. 9 and the possible embodiments thereof.

An embodiment of this application further provides a computer-readable storage medium. The computer-readable storage medium stores a computer program or computer instructions, and the computer program or the computer instructions are executed by a processor to implement the method implemented by the cloud device in FIG. 9 and the possible embodiments thereof.

An embodiment of this application further provides a computer-readable storage medium. The computer-readable storage medium stores a computer program or computer instructions, and the computer program or the computer instructions are executed by a processor to implement the method implemented by the roadside sensing apparatus in FIG. 9 and the possible embodiments thereof.

An embodiment of this application further provides a computer program product. When the computer program product is read and executed by a computer, the operations implemented by the vehicle in the method in any one of FIG. 9 and the possible embodiments thereof are performed.

An embodiment of this application further provides a computer program product. When the computer program product is read and executed by a computer, the operations implemented by the cloud device in the method in any one of FIG. 9 and the possible embodiments thereof are performed.

An embodiment of this application further provides a computer program product. When the computer program product is read and executed by a computer, the operations implemented by the roadside sensing apparatus in the method in any one of FIG. 9 and the possible embodiments thereof are performed.

It should be understood that, in embodiments of this application, sequence numbers of processes do not mean an execution sequence. The execution sequence of the processes should be determined based on functions and internal logic of the processes, and should not constitute any limitation on implementation processes of embodiments of this application.

It should be further understood that, when being used in the specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that "one embodiment", "an embodiment", or "a possible implementation" mentioned throughout this specification means that particular features, structures, or characteristics related to embodiments or implementations are included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A driving control method, wherein the method comprises:
obtaining first information from a cloud device, wherein the first information comprises sensing information of a roadside sensing apparatus for a first object;
obtaining first fusion information based on the first information and first sensing information, and performing first driving control based on the first fusion information, wherein the first sensing information comprises sensing information obtained by using an onboard sensor of a vehicle; and
when the vehicle senses the first object based on second sensing information, performing second driving control based on the second sensing information, wherein the second sensing information comprises sensing information that is for the first object and that is obtained by using the onboard sensor of the vehicle.

2. The method according to claim 1, wherein the first object comprises one or more target vehicles, and the first information comprises sensing information of the roadside sensing apparatus for the one or more target vehicles.

3. The method according to claim 1 or 2, wherein the method further comprises:
obtaining second information from the cloud device, wherein the second information indicates sensing information of the roadside sensing apparatus for a second object, and the second object comprises one or more pedestrians; and
discarding the second information.

4. The method according to any one of claims 1 to 3, wherein the method further comprises: obtaining third information from the cloud device, wherein the third information indicates the sensing information of the roadside sensing apparatus for the first object when the vehicle senses the first object; and
performing the second driving control based on the second sensing information of the vehicle comprises:
implementing information fusion on the third information and the second sensing information based on a preset weight, to obtain second fusion information, wherein a weight of the second sensing information is greater than a weight of the third information; and
performing the second driving control based on the second fusion information.

5. The method according to any one of claims 1 to 4, wherein the method further comprises:
obtaining fourth information from the cloud device, wherein the fourth information indicates the sensing information of the roadside sensing apparatus for the first object when the vehicle senses the first object;
calibrating the fourth information based on the second sensing information, to obtain a calibration result; and
sending the calibration result, wherein the calibration result is used to correct a sensing confidence level of the roadside sensing apparatus.

6. The method according to any one of claims 1 to 5, wherein when the vehicle senses the first object, or when the first object leaves a sensing range of the roadside sensing apparatus, the method further comprises:
obtaining fifth information from the cloud device, wherein the fifth information indicates the vehicle to disable a roadside sensing fusion function, and the roadside sensing fusion function is a function of fusing the sensing information of the roadside sensing apparatus and the sensing information of the vehicle.

7. The method according to any one of claims 1 to 6, wherein obtaining the first information from the cloud device comprises:
obtaining the first information when the vehicle is incapable of sensing the first object, and the first object meets a first condition, wherein
the first condition comprises: a distance between the first object and the vehicle is less than or equal to a first preset distance, and/or a time-to-collision between the first object and the vehicle is less than or equal to first preset duration.

8. The method according to any one of claims 1 to 7, wherein the roadside sensing apparatus is deployed on a driving blind spot road section in an advancing direction of the vehicle, and the sensing range of the roadside sensing apparatus covers the driving blind spot road section; and
the driving blind spot road section comprises one or more of the following: a curved road section, a road section comprising an intersection, a road section comprising an entrance or an exit, or a crest road section.

9. A collaborative driving method, wherein the method comprises:
obtaining vehicle state information from a vehicle, wherein the vehicle state information comprises location information and speed information of the vehicle;
obtaining first information, wherein the first information indicates sensing information of a roadside sensing apparatus for a first object;
determining, based on the vehicle state information and the first information, that the first object meets a first condition, wherein the first condition comprises: a distance between the first object and the vehicle is less than or equal to a first preset distance, and/or a time-to-collision between the first object and the vehicle is less than or equal to first preset duration; and
sending the first information to the vehicle.

10. The method according to claim 9, wherein the method further comprises:
obtaining second information from the roadside sensing apparatus, wherein the second information indicates the sensing information of the roadside sensing apparatus for the first object when the vehicle senses the first object;
sending the second information to the vehicle;
obtaining third information from the vehicle, wherein the third information is a calibration result obtained by calibrating the second information based on sensing information of the vehicle; and
sending the calibration result to the roadside sensing apparatus, wherein the calibration result is used to correct a sensing confidence level of the roadside sensing apparatus.

11. The method according to claim 9 or 10, wherein when the vehicle senses the first object, or when the first object leaves a sensing range of the roadside sensing apparatus, the method further comprises:
sending fourth information to the vehicle, wherein the fourth information indicates the vehicle to disable a roadside sensing fusion function, and the roadside sensing fusion function is a function of fusing the sensing information of the roadside sensing apparatus and the sensing information of the vehicle.

12. The method according to claim 11, wherein the method further comprises:
obtaining fifth information from the roadside sensing apparatus, wherein the fifth information indicates that the first object leaves the sensing range of the roadside sensing apparatus; and
triggering, based on the fifth information, an operation of sending the fourth information to the vehicle.

13. A driving control system, comprising:
an obtaining unit, configured to obtain first information from a cloud device, wherein the first information comprises sensing information of a roadside sensing apparatus for a first object; and
a processing unit, configured to: obtain first fusion information based on the first information and first sensing information, and perform first driving control based on the first fusion information, wherein the first sensing information comprises sensing information obtained by using an onboard sensor of a vehicle, wherein
the processing unit is further configured to: when the vehicle senses the first object based on second sensing information, perform second driving control based on the second sensing information, wherein the second sensing information comprises sensing information that is for the first object and that is obtained by using the onboard sensor of the vehicle.

14. The driving control system according to claim 13, wherein
the obtaining unit is further configured to obtain second information from the cloud device, wherein the second information indicates sensing information of the roadside sensing apparatus for the second object, and the second object comprises one or more pedestrians; and
the processing unit is further configured to discard the second information.

15. The driving control system according to claim 13 or 14, wherein
the obtaining unit is further configured to obtain third information from the cloud device, wherein the third information indicates the sensing information of the roadside sensing apparatus for the first object when the vehicle senses the first object; and
the processing unit is specifically configured to:
implement information fusion on the third information and the second sensing information based on a preset weight, to obtain second fusion information, wherein a weight of the second sensing information is greater than a weight of the third information; and
perform the second driving control based on the second fusion information.

16. The driving control system according to any one of claims 13 to 15, wherein
the obtaining unit is further configured to obtain fourth information from the cloud device, wherein the fourth information indicates the sensing information of the roadside sensing apparatus for the first object when the vehicle senses the first object;
the processing unit is further configured to calibrate the fourth information based on the second sensing information, to obtain a calibration result; and
the vehicle further comprises a sending unit, configured to send the calibration result, wherein the calibration result is used to correct a sensing confidence level of the roadside sensing apparatus.

17. A cloud device, wherein the cloud device comprises:
an obtaining unit, configured to obtain vehicle state information from a vehicle, wherein the vehicle state information comprises location information and speed information of the vehicle;
the obtaining unit is further configured to obtain first information, wherein the first information indicates sensing information of a roadside sensing apparatus for a first object;
a processing unit, configured to determine, based on the vehicle state information and the first information, that the first object meets a first condition, wherein the first condition comprises: a distance between the first object and the vehicle is less than or equal to a first preset distance, and/or a time-to-collision between the first object and the vehicle is less than or equal to first preset duration; and
a sending unit, configured to send the first information to the vehicle.

18. A vehicle, wherein the vehicle comprises a processor and a memory, the memory is configured to store a computer program or computer instructions, and the processor is configured to execute the computer program or the computer instructions stored in the memory, to enable the vehicle to perform the method according to any one of claims 1 to 8.

19. A cloud device, wherein the cloud device comprises a processor and a memory, the memory is configured to store a computer program or computer instructions, and the processor is configured to execute the computer program or the computer instructions stored in the memory, to enable the cloud device to perform the method according to any one of claims 9 to 12.

20. A computer-readable storage medium, wherein the computer-readable storage medium stores a computer program or computer instructions, and the computer program or the computer instructions are executed by a processor to implement the method according to any one of claims 1 to 8; or
the computer program or the computer instructions are executed by a processor to implement the method according to any one of claims 9 to 12.
